(19) Europäisches Patentamt
European Patent Office
Office européen des brevets

(11) **EP 4 768 527 A1**

(12) **EUROPEAN PATENT APPLICATION**

(43) Date of publication:
**01.07.2026 Bulletin 2026/27**

(21) Application number: **25224562.6**

(22) Date of filing: **17.12.2025**

(51) International Patent Classification (IPC):
**C08J 5/20** (2006.01)  **B01D 71/26** (2006.01)
**H01M 50/414** (2021.01)  **H01M 50/491** (2021.01)
**C08J 7/12** (2006.01)

(52) Cooperative Patent Classification (CPC):
**C08J 5/20; B01D 67/009; B01D 71/261;
B01D 71/34; C08J 7/123; H01M 50/414;
H01M 50/417; H01M 50/426; H01M 50/491;**
B01D 67/0027; B01D 69/02; B01D 2325/24;
C08J 2323/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.12.2024 KR 20240201274**

(71) Applicant: **SK IE Technology Co., Ltd.
Seoul 03161 (KR)**

(72) Inventors:
• **KO, Byoung Sun
03188 Seoul (KR)**
• **PARK, Hye Jin
03188 Seoul (KR)**
• **LEE, Sin Ho
03188 Seoul (KR)**
• **CHOI, Yu Mi
03188 Seoul (KR)**
• **HAN, Kyu Seok
03188 Seoul (KR)**

(74) Representative: **Prüfer & Partner mbB
Patentanwälte · Rechtsanwälte
Sohnckestraße 12
81479 München (DE)**

(54) **POROUS POLYMER FILM AND MANUFACTURING METHOD THEREOF**

(57)     A porous polymer film according to embodiments of the present disclosure has a crosslinking reactivity of 1.0 or more, as defined by Equation 1.

[Equation 1]

$$\text{Crosslinking reactivity} = ((A \times B) / 10000) - C,$$

wherein in Equation 1, A denotes the melt fracture temperature (°C), that is the temperature at which the porous polymer film fractures when stretched under a force of 0.015 N while being heated to 220°C at a heating rate of 5°C/min by thermomechanical analysis (TMA), B denotes the gel content(%), which is the percentage obtained by dividing the mass of the undissolved residual solid after immersing the porous polymer film in xylene at 135°C for 3 hours by the initial mass, and C denotes the high load melt index (HLMI) (g/10min) measured under conditions of a temperature of 190°C and a load of 21.6 kg according to ASTM D1238 for the porous polymer film.

EP 4 768 527 A1

[FIG. 1]

| Extruding and stretching of a raw material to form a preliminary porous polymer film | S10 |

↓

| Forming an oxygen-exchanged preliminary porous polymer film in which an oxygen content based on total gases included in pores of the preliminary porous polymer film is less than 9% by volume ("vol%") | S20 |

↓

| Embedding and sealing the oxygen-exchanged preliminary porous polymer film in an oxygen-impermeable outer case | S30 |

↓

| Irradiating the oxygen-exchanged preliminary porous polymer film with electron beams from an outside of the oxygen-impermeable outer case to manufacture the porous polymer film | S40 |

**Description**

[BACKGROUND OF THE INVENTION]

1. Field of the Invention

The present disclosure relates to a porous polymer film and to a method of manufacturing a porous polymer film.

2. Description of the Related Art

Porous polymer films including micropores and exhibiting low reactivity are applied in various fields. For example, the porous polymer films are used as battery separators, in gas separation processes and/or equipment, as osmotic membranes, and in other applications for physical or electrical separation of components or for preventing remixing of purified products.

As the porous polymer films are utilized in various industrial fields, porous polymer films with high durability even in extreme environments are required. For example, porous polymer films with improved durability are needed even in extremely high or low temperatures, in environments generating excessive static electricity, and in environments subject to high external forces.

Technologies for improving the durability of typical porous polymer films through surface treatment or post-processing have been proposed. However, there remains a need to provide porous polymer films with sufficiently high chemical resistance and mechanical properties.

[SUMMARY OF THE INVENTION]

An object of the present disclosure is to provide a porous polymer film, and a manufacturing method of a porous polymer film, having enhanced chemical and mechanical properties.

A porous polymer film according to exemplary embodiments of the present disclosure has a crosslinking reactivity of 1.0 or more, as defined by Equation 1 below.

[Equation 1]

$$\text{Crosslinking reactivity} = ((A \times B) / 10000) - C$$

In Equation 1, A denotes the melt fracture temperature (°C), that is the temperature at which the porous polymer film fractures when stretched under a force of 0.015 N while being heated to 220°C at a heating rate of 5°C/min by thermomechanical analysis (TMA),

B denotes the gel content(%), which is the percentage obtained by dividing the mass of the undissolved residual solid after immersing the porous polymer film in xylene at 135°C for 3 hours by the initial mass, and
C denotes the high load melt index (HLMI) (g/10min) measured under conditions of a temperature of 190°C and a load of 21.6 kg according to ASTM D1238 for the porous polymer film.

According to an embodiment, in Equation 1, A may be 160°C or higher.
According to an embodiment, in Equation 1, B may be 80% or higher.
According to an embodiment, in Equation 1, C may be 0.2 g/10 min or less.
The porous polymer film according to an embodiment may have a porosity of 10% to 80%.
The porous polymer film according to an embodiment may include at least one selected from the group consisting of polyethylene (PE), polypropylene (PP), polybutylene, polypentene, polymethylpentene, polyvinylidene fluoride (PVDF), polyvinylidene fluoride-hexafluoropropylene (PVDF-HFP), polyvinylidene fluoride-chlorotrifluoroethylene (PVDF-CTFE), polyvinylidene fluoride-ethylenetetrafluoroethylene (PVDF-ETFE), polyacrylonitrile (PAN), polyethylene terephthalate (PET), polybutylene terephthalate (PBT), polyethylene naphthalene (PEN), polyimide (PI), polyphenylene sulfide (PPS), polysulfone, polyethersulfone (PES), ethylene-vinyl acetate (EVA), and polycarbonate (PC).
A separator for a secondary battery according to exemplary embodiments of the present disclosure may include the above-described porous polymer film.
A gas separation membrane according to exemplary embodiments of the present disclosure may include the above-described porous polymer film.
According to another general aspect, a method for manufacturing a porous polymer film may be provided that comprises the following steps: extruding and stretching a raw material including a polymer to form a preliminary porous polymer film (step S10); forming an oxygen-exchanged preliminary porous polymer film in which an oxygen content based on the total gases included in the pores of the preliminary porous polymer film is less than 9% by volume ("vol%") (step S20); embedding and sealing the oxygen-exchanged preliminary porous polymer film in an oxygen-impermeable outer case (step S30); and irradiating the oxygen-exchanged preliminary porous polymer film with electron beams from an outside of the oxygen-impermeable outer case (step S40).

This manufacturing is particularly adapted for preparing a porous polymer film as defined in any one of the above described aspects and/or embodiments of the porous polymer film of the present disclosure.

In an embodiment, the preliminary porous polymer film may be curable by electron beam irradiation and/or may include one or more selected from the group of polyethylene, polypropylene, polymethylpentene, polyesters, polycarbonate, styrene resins, fluorine resins, and vinyl chloride resins.

In an embodiment, in step S20, the preliminary porous polymer film may be left in a quasi-vacuum environment having an atmospheric pressure of less than $10^{-2}$ torr (1.333 Pa) for 30 minutes to 2 hours, and an inert gas is then supplied, so that some or all of the space previously occupied by oxygen prior to quasi-vacuum treatment may be filled with the inert gas.

In an embodiment, the supply of the inert gas may be performed under conditions of a flow rate of 0.5 L/min to 1.5 L/min and/or the inert gas may include any one or more of $N_2$, He, Ar, Ne, Kr, and Xe.

In a preferred embodiment, the inert gas is $N_2$.

In an embodiment, in step S30, the oxygen-impermeable outer case may be configured to have an oxygen permeability of 1 cc/m$^2$/day/atm or less, determined according to the ASTM D3985 standard, and may comprise at least one selected from the group consisting of polyamide-imide, polycarbonate, polypropylene, polyvinyl chloride, polyester, polyamide, polyurethane, and a mixture of polyethylene and paraffin. Preferably, the oxygen-impermeable outer case further comprises, at least in part, aluminum and/or stainless steel.

In an embodiment, in step S40, the electron beam may be irradiated once or twice or more times from an outside of the oxygen-impermeable outer case. The electron beam may be irradiated to a cumulative dose of 10 kGy to 300 kGy, preferably of 25 kGy to 150 kGy, more preferably of 75 kGy to 150 kGy.

The porous polymer film according to embodiments of the present disclosure may have improved solvent resistance. Accordingly, damage to the porous polymer film due to contact with an organic solvent may be suppressed or reduced.

The porous polymer film according to embodiments of the present disclosure may have enhanced heat resistance. Accordingly, the polymer film may effectively suppress or reduce not only thermal damage in high-temperature environments but also mechanical damage due to external forces, and may maintain operational reliability over a long period of time.

The method for manufacturing a porous polymer film according to embodiments of the present disclosure may provide a porous polymer film with improved physical properties by suppressing or reducing side reactions caused by oxygen during crosslinking of polymers.

[BRIEF DESCRIPTION OF THE DRAWINGS]

The above and other objects, features and advantages of the present disclosure will be more clearly understood from the following detailed description taken in conjunction with the accompanying drawing, in which:

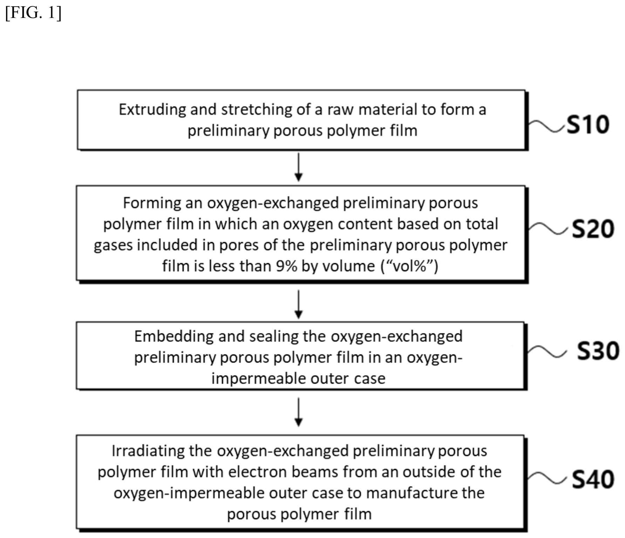

FIG. 1 is a schematic process flowchart illustrating a method for manufacturing a porous polymer film according to embodiments.

[DETAILED DESCRIPTION OF THE INVENTION]

Hereinafter, exemplary embodiments of the present disclosure will be described in detail with reference to the accompanying drawing so that those skilled in the art may easily practice the present disclosure.

A porous polymer film according to embodiments of the present disclosure has a crosslinking reactivity of 1.0 or more, as defined by Equation 1 below.

[Equation 1]

$$\text{Crosslinking reactivity} = ((A \times B) / 10000) - C$$

In Equation 1, A denotes the melt fracture temperature (°C), that is the temperature at which the porous polymer film fractures when stretched under a force of 0.015 N while being heated to 220°C at a heating rate of 5°C/min by thermomechanical analysis (TMA); B denotes the gel content(%), which is the percentage obtained by dividing the mass of the undissolved residual solid after immersing the porous polymer film in xylene at 135°C for 3 hours by the initial mass; and C denotes the high load melt index (HLMI) (g/10min) measured under conditions of a temperature of 190°C and a load of 21.6 kg according to ASTM D1238 for the porous polymer film.

The thermomechanical analysis may be performed, for example, using a thermomechanical analyzer. The temperature of the porous polymer film may be increased by securing both ends of the film within the thermomechanical analyzer and then tensioning it. For example, with both ends of the porous polymer film being secured or clamped, the temperature may be increased from 25°C to 220°C at a rate of 5°C/min while applying a force of 0.015 N. During the heating process with the tensile force being applied, the temperature at which the porous polymer film fractures may be designated as the melt fracture temperature. For example, the cross-sectional area of the test specimen may be about 3 mm to 5 mm in width and about 10 mm to 20 mm in length, and in a non-limiting example, the specimen may have a width of 4 mm and a length of 16 mm.

For example, the TMA450 model from TA Instruments may be used as the thermomechanical analyzer, but is not limited thereto.

For example, as the high-temperature durability of the porous polymer film improves, the melt fracture temperature may increase.

According to an embodiment, in Equation 1, A may be 160°C or higher.

According to an embodiment, in Equation 1, A may be 160°C to 250°C, or 160°C to 200°C.

Within the above range, the high-temperature durability of the porous polymer film may be further enhanced.

In Equation 1, B may be the percentage obtained by dividing the mass of the undissolved residual solid after immersing a sample of the porous polymer film, for example, 3 g, in xylene at 135°C for 3 hours, by the initial mass before immersion. The xylene may be, for example, o-xylene, m-xylene, or p-xylene, and is not particularly limited thereto.

For example, B may be calculated through the steps of: heating 200 ml of xylene to 135°C; placing 3 g of the porous polymer film into the xylene; filtering and drying the solid after 3 hours from the time of addition, and measuring its weight; and converting the ratio of the mass of the residual solid to the initial input mass of 3 g into a percentage. For example, as the organic solvent resistance of the porous polymer film improves, the gel content may be higher.

According to an embodiment, in Equation 1, B may be 80% or more.

According to an embodiment, in Equation 1, B may be 85% or more, 90% or more, or 95% or more. For example, B may be 95% to 100%.

Within the above range, the organic solvent resistance of the porous polymer film may be further improved. Specifically, the porous polymer film may show significantly enhanced solvent resistance when immersed in hydrophobic organic solvents, even at increased temperatures.

According to an embodiment, the solubility of the porous polymer film in xylene may refer to the ratio of the dissolved portion to the total input amount, which may be defined as the value obtained by subtracting the gel content from 100, and may be calculated by the equation: Solubility = 100 - B (%). For example, the solubility of the porous polymer film in xylene may be less than 20%, less than 15%, less than 10%, or less than 5%.

In Equation 1, C denotes the high load melt index (HLMI). For example, C may refer to the high load melt index (HLMI), which is measured as the mass (g/10 min) of the molten polymer extruded under a load of 21.6 kg at 190°C for 10 minutes after preparing a specimen by cutting the porous polymer film to a predetermined size.

In addition, for example, C may refer to the high load melt index (HLMI), measured in units of g/10 min, obtained by placing 3 g of the porous polymer film in a perforated chamber at a temperature of 190°C, applying a load of 21.6 kg, and measuring the mass extruded for 10 minutes.

Further, for example, C may be measured according to ASTM D1238.

As the processability of the porous polymer film improves, the HLMI may be higher.

According to an embodiment, in Equation 1, C may be 0.2 g/10 min or less.

According to an embodiment, in Equation 1, C may be 0.1 g/10 min or less, 0.05 g/10 min or less, 0.03 g/10 min or less, or 0.02 g/10 min or less. In addition, by way of example, when C is converted to an hourly value, 0.1 g/10 min may correspond to 0.6 g/hr, and 0.02 g/10 min may correspond to 0.12 g/hr.

Within the above range, the processability of the porous polymer film may be further improved.

If the porous polymer film has a crosslinking reactivity of less than 1.0, the processability, solvent resistance, and/or high-temperature durability of the porous polymer film may be reduced. Accordingly, it may be difficult to apply the porous polymer film to various fields.

In one embodiment, the porous polymer film may have a crosslinking reactivity of more than 1.0, preferably of 1.0 to 3.0, more preferably of 1.5 to 3.0, even more preferably of 1.5 to 2.5, or most preferably of 1.5 to 2.0. Accordingly, the porous polymer film may show increased mechanical strength and, at the same time, achieve improved organic solvent resistance even at increased temperatures, thereby providing improved mechanical properties and durability.

The porous polymer film according to an embodiment may have a porosity of 10% to 80%.

The porous polymer film according to an embodiment may have a porosity of 30% to 60%. Within this range, the porous polymer film may have adequate mechanical properties while also exhibiting sufficient air permeability. When utilized in a secondary battery and immersed in a liquid electrolyte, improved ionic conductivity may thus be achieved.

The porous polymer film according to an embodiment may have a puncture strength of 0.15 N/$\mu$m or more, or preferably of 0.40 N/$\mu$m or more. The puncture strength of the porous polymer film may vary depending on the material.

The porous polymer film is not limited as long as it can be cured by electron beam irradiation as described below, and may include polyolefin resins such as polyethylene, polypropylene, and polymethylpentene; polyesters such as nylon and polyethylene terephthalate; polycarbonate; styrene resins; fluorine resins such as polytetrafluoroethylene and polyvinylidene fluoride; and vinyl chloride resins. These may be used alone or in combination with two or more thereof.

The porous polymer film according to an embodiment may include at least one selected from the group consisting of, for example, polyethylene (PE), polypropylene (PP), polybutylene, polypentene, polymethylpentene, polyvinylidene fluoride (PVDF), polyvinylidene fluoride-hexafluoropropylene (PVDF-HFP), polyvinylidene fluoride-chlorotrifluoroethylene (PVDF-CTFE), polyvinylidene fluoride-ethylenetetrafluoroethylene (PVDF-ETFE), polyacrylonitrile (PAN), polyethylene terephthalate (PET), polybutylene terephthalate (PBT), polyethylene naphthalene (PEN), polyimide (PI), polyphenylene sulfide (PPS), polysulfone, polyethersulfone (PES), ethylene-vinyl acetate (EVA), and polycarbonate (PC).

The polyolefin resin may include a polypropylene resin, a polyethylene resin, or the like.

For example, the porous polymer film may include a polyethylene resin.

When the porous film includes at least one of the polymers listed above, it may have enhanced processability.

For example, during electron beam irradiation, chemical bonds within the polymer chains may be cleaved to generate highly reactive radicals, which may temporarily reduce the mechanical strength of the polymer. The generated radicals may then form new bonds between different polymer chains under an inert atmosphere, thereby restoring mechanical strength and forming crosslinks. Such crosslinking may produce a three-dimensional network structure that exhibits improved thermal and chemical stability, including enhanced solvent resistance and an increased melt fracture temperature. An inert atmosphere is preferred for effective crosslinking, since the generated radicals are highly reactive and may be quenched upon contact with oxygen, hindering the recovery of mechanical strength. In addition, the presence of oxygen at an oxygen concentration comparable to that of ambient air may weaken the formation of crosslinks and consequently reduce the thermal and chemical stability of the polymer.

FIG. 1 is a schematic process flowchart illustrating a method for manufacturing a porous polymer film according to embodiments.

The method for manufacturing the porous polymer film may include: extruding and stretching a raw material including a polymer to form a preliminary porous polymer film (step S10); forming an oxygen-exchanged preliminary porous polymer film in which oxygen content based on the total gases included in the pores of the preliminary porous polymer film is less than 9% by volume ("vol%") (step S20); embedding and sealing the oxygen-exchanged preliminary porous polymer film in an oxygen-impermeable outer case (step S30); and irradiating the oxygen-exchanged preliminary porous polymer film with electron beams from outside the oxygen-impermeable outer case to manufacture a porous polymer film (step S40).

First, a preliminary porous polymer film may be prepared. The preliminary porous polymer film may be purchased or fabricated.

For example, the preliminary porous polymer film may be fabricated by extruding and stretching pellets or melts including the polymer. For example, raw resin pellets may be extruded using an extruder at a temperature of 200°C or higher to form a resin sheet, and the resin sheet may be cooled to prepare an unstretched sheet. The unstretched sheet may then be stretched to form a preliminary porous polymer film. The stretching method may include simultaneous biaxial stretching, sequential biaxial stretching, multi-stage stretching, multiple stretching, and/or other conventional stretching techniques.

The preliminary porous polymer film is not limited as long as it can be cured by electron beam irradiation as described below, and may include polyolefin resins such as polyethylene, polypropylene, and polymethylpentene; polyesters such as nylon and polyethylene terephthalate; polycarbonate; styrene resins; fluorine resins such as polytetrafluoroethylene and polyvinylidene fluoride; and vinyl chloride resins. These may be used alone or in combination of two or more thereof.

The preliminary porous polymer film may include at least one selected from the group consisting of, for example, polyethylene (PE), polypropylene (PP), polybutylene, polypentene, polymethylpentene, polyvinylidene fluoride (PVDF), polyvinylidene fluoride-hexafluoropropylene (PVDF-HFP), polyvinylidene fluoride-chlorotrifluoroethylene (PVDF-CTFE), polyvinylidene fluoride-ethylenetetrafluoroethylene (PVDF-ETFE), polyacrylonitrile (PAN), polyethylene terephthalate (PET), polybutylene terephthalate (PBT), polyethylene naphthalene (PEN), polyimide (PI), polyphenylene sulfide (PPS), polysulfone, polyethersulfone (PES), ethylene-vinyl acetate (EVA), and polycarbonate (PC). For example, the preliminary porous polymer film may include a polyethylene-based resin.

The preliminary porous polymer film may include a collection of linear polymer chains. The linear polymer chains may not be bonded to each other in a direction perpendicular to the longitudinal direction of the chains, and thus the preliminary porous polymer film may exhibit very high processability but low mechanical properties.

According to an embodiment, the preliminary porous polymer film may have a pore size of 100 nm or less, for example, 40 nm to 100 nm, 40 nm to 90 nm, 40 nm to 70 nm, or 40 nm to 60 nm. The pore size may refer to the average pore diameter.

As a non-limiting example, the pore size may be measured using a pore size analyzer according to the ASTM F316-03 standard. For example, a capillary flow porometer, a gas adsorption analyzer (BET, BJH, etc.), or a gas displacement pycnometer (e.g., helium pycnometer) may be used as the pore size analyzer.

For example, the pores of the preliminary porous polymer film may be filled with air. The concentration of oxygen in the air may be approximately 21 vol%.

For example, the oxygen content based on the total gases included in the pores of the oxygen-exchanged preliminary porous polymer film may be less than 9 vol%, less than 8.5 vol%, less than 7 vol%, less than 5 vol%, or less than 4.5 vol%.

For example, the oxygen-exchanged preliminary porous polymer film may be manufactured by replacing 57 vol% or more, 60 vol% or more, 70 vol% or more, 80 vol% or more, or 85 vol% or more of the total volume of oxygen contained in the pores of the preliminary porous polymer film with an inert gas. That is, the oxygen substitution degree of the oxygen-exchanged preliminary porous polymer film may be 57 vol% or more, 60 vol% or more, 70 vol% or more, 80 vol% or more, or 85 vol% or more.

The preliminary porous polymer film includes a plurality of pores, and the pores may contain gas, such as air. For example, if the oxygen content of the total gases included in the pores is excessively high, impurities may be formed during a subsequent crosslinking process, or crosslinking sites between polymer chains may react with oxygen, such that sufficient crosslinking may not be performed.

In one embodiment, the preliminary porous polymer film may be maintained in a vacuum atmosphere and then left in an inert gas atmosphere to form the oxygen-exchanged preliminary porous polymer film.

According to an embodiment, the preliminary porous polymer film may be left in a quasi-vacuum environment having an atmospheric pressure of less than $10^{-2}$ torr (1.333 Pa) for 30 minutes to 2 hours. The quasi-vacuum environment may include an environment where the atmospheric pressure is close to zero and is similar to a vacuum.

When the preliminary porous polymer film is left in the quasi-vacuum environment, the oxygen-containing gas, such as air, present in the pores may be removed, causing the preliminary porous polymer film to deform into a compressed state.

Thereafter, an inert gas may be supplied. Accordingly, the inert gas may penetrate into the pores of the preliminary porous polymer film, and some or all of the space previously occupied by oxygen prior to vacuum or quasi-vacuum treatment may be filled with the inert gas.

According to an embodiment, the supply of the inert gas may be performed under conditions of a flow rate of 0.5 L/min to 1.5 L/min.

For example, the inert gas is not particularly limited and may include any one or more of $N_2$, He, Ar, Ne, Kr, and Xe.

Therefore, an oxygen-exchanged preliminary porous polymer film with a reduced oxygen content in the total gases filled in the pores may be manufactured.

As used herein, the term "oxygen substitution degree" is defined as the ratio of the total oxygen content removed from the pores of the preliminary porous polymer film to the total oxygen content contained in the pores, converted into a percentage. The method for measuring the total oxygen content is not particularly limited, and may, for example, be measured using the molar amount or volumetric ratio of oxygen. For example, when calculating the oxygen substitution degree using the total molar amount of oxygen as the total oxygen content, the oxygen substitution degree is expressed as the percentage ratio of the total molar amount of oxygen removed from the pores of the preliminary porous polymer film to the total molar amount of oxygen contained in the pores of the preliminary porous polymer film.

For example, the oxygen substitution degree may refer to a value converted into a percentage of the total molar amount of oxygen removed from the pores of the preliminary porous polymer film after being exposed to the vacuum or quasi-vacuum environment to the total molar amount of oxygen present in the pores of the preliminary porous polymer film before being exposed to the vacuum or quasi-vacuum environment.

As a non-limiting example, before being introduced into the vacuum or quasi-vacuum atmosphere chamber, the total molar amount ($n_I$) of oxygen present in the pores of the preliminary porous polymer film may be calculated as follows. For example, the interior of the pores of the film stored or prepared under an air atmosphere before being introduced into the chamber may be filled with air. The pore volume ($V_P$) may be calculated by multiplying the total volume ($V_F$) of the preliminary porous polymer film by the porosity ($R_P$). The pore volume ($V_P$), the atmospheric absolute pressure of about 101.325 kPa, the room temperature of about 298.15 K, and the gas constant (R) may then be applied to the ideal gas equation of state (PV=nRT) to calculate the total molar amount ($n_T$) of gas in the pores. At this time, the temperature is not particularly limited, and the temperature measured under the atmosphere in which the film is stored or prepared may be applied to the ideal gas equation of state. The total molar amount of oxygen present in the pores ($n_I$) may be calculated by multiplying the total molar amount of gas in the pores ($n_T$) by the mole fraction of oxygen in the atmosphere ($n_O$), which is approximately 0.21. Here, the gas constant R is a known constant and may be approximately 8.314 J/mol·K.

As a non-limiting example, the total molar amount ($n_F$) of oxygen removed from the pores of the preliminary porous polymer film may be calculated as follows.

For example, an oxygen analyzer may be installed in the chamber to measure the increase in partial pressure ($P_O$) of oxygen. The increase in partial pressure ($P_O$), the effective volume ($V_C$) of the chamber, the internal temperature ($T_C$) of the chamber, and the gas constant (R) may be applied to the ideal gas equation of state to calculate the "total molar amount ($n_F$) of oxygen removed from the pores".

The oxygen analyzer may be a device for measuring the increase in partial pressure ($P_O$) of oxygen, and if necessary, may also measure the partial pressure of oxygen. The oxygen analyzer may be, for example, a residual gas analyzer (RGA, mass spectrometer), a paramagnetic oxygen analyzer, a zirconia oxygen analyzer, a galvanic cell-type oxygen analyzer, or another electrochemical oxygen analyzer. Any device capable of measuring the partial pressure of oxygen (or the temporal increase in partial pressure) may be used, and the structure or material of the device is not particularly limited. In addition, the increase in partial pressure ($P_O$) of oxygen may be calculated by measuring the oxygen concentration (vol%) and the total chamber pressure, multiplying them to obtain the oxygen partial pressure, and then calculating the difference from the initial oxygen partial pressure.

For example, the oxygen-exchanged preliminary porous polymer film may be embedded and sealed in an oxygen-impermeable outer case.

Gases have a high diffusion rate even without an external force, so unless the gas is blocked, oxygen may diffuse into the pores over time. Embedding and sealing the oxygen-exchanged preliminary porous polymer film in the oxygen-impermeable outer case may prevent oxygen from penetrating into the pores during subsequent processes.

In one embodiment, the oxygen-impermeable outer case may have an oxygen permeability of 1 cc/m²/day/atm or less, as measured under conditions of a temperature of 23°C and a relative humidity of 0% according to the ASTM D3985 method. Since the oxygen barrier property improves as the oxygen permeability decreases, the lower limit thereof is not particularly limited. The oxygen permeability may be, for example, 0.9 cc/m²/day/atm or less, 0.5 cc/m²/day/atm or less, or 0.3 cc/m²/day/atm or less.

As a non-limiting example, the oxygen permeability may be measured using an oxygen permeability tester, for example, a Mocon OX-TRAN device.

In one embodiment, the oxygen-impermeable outer case may include at least one selected from the group consisting of polyamide-imide, polycarbonate, polypropylene, polyvinyl chloride, polyester, polyamide, polyurethane, and a mixture of polyethylene and paraffin.

For example, a film including the mixture of polyethylene and paraffin, such as parafilm, may be used.

For example, the material of the outer case is not particularly limited, but any material that does not deform during the electron beam crosslinking and subsequent heat treatment processes described below may be used. For example, the outer case may include, at least in part, aluminum foil and/or stainless steel.

Crosslinking may be performed by irradiating the oxygen-impermeable outer case with electron beams. The oxygen-exchanged preliminary porous polymer film may be crosslinked in a sealed state, thereby manufacturing a porous polymer film with improved mechanical properties.

In one embodiment, the subsequent heat treatment may be performed while the oxygen-impermeable outer case is sealed.

According to an embodiment, the electron beam may be irradiated with an acceleration voltage of 0.1 MeV to 10 MeV. In some embodiments, the electron beam may be irradiated with an acceleration voltage of 0.1 MeV to 5 MeV or 0.2 MeV to 2.5 MeV.

Within the above range, crosslinking between polymer chains may be appropriately performed while suppressing polymer chain degradation.

In one embodiment, the electron beam may be irradiated once or twice or more times from the outside of the oxygen-impermeable outer case.

According to an embodiment, the electron beam may be irradiated to a cumulative dose of 10 kGy to 300 kGy. In some embodiments, the electron beam may be irradiated to a cumulative dose of 25 kGy to 150 kGy, or 75 kGy to 150 kGy.

For example, the cumulative dose of the electron beam may be an average cumulative dose per unit area for the oxygen-exchanged preliminary porous polymer film. For example, the cumulative dose may be calculated based on a single dose of the electron beam, a region of the film irradiated with the electron beam, the irradiation depth of the electron beam, and the number of passes.

Within the above range, crosslinking between polymer chains may be more appropriately performed, while polymer chain degradation may be further suppressed.

According to an embodiment, the exterior of the oxygen-impermeable outer case may be an air atmosphere or an inert gas atmosphere.

According to an embodiment, after performing the crosslinking, a subsequent heat treatment may be performed by applying heat energy from outside the oxygen-impermeable outer case. Therefore, additional crosslinking of remaining free radicals in the polymer chains may be promoted, and the mechanical properties of the porous polymer film may be further improved.

The subsequent heat treatment may be performed in a sealed state. This may further prevent the above-described oxygen diffusion and additional side reactions of the free radicals.

According to an embodiment, the ratio of the porosity of the preliminary porous polymer film to the porosity of the porous polymer film may be greater than 1 and less than 10. Through the crosslinking process, the pore volume of the preliminary porous polymer film may be reduced, thereby providing a porous polymer film with improved mechanical properties.

**The** porosity of the preliminary porous polymer film and the porous polymer film may be calculated, for example, by calculating the space within the film (pore volume ratio).

The porosity of the film may be measured, for example, using a mass- and dimension-based method or a liquid infiltration method.

**As** a non-limiting example, in the mass- and dimension-based method, the porosity may be calculated as follows. First, a film specimen is prepared, the mass of the specimen is measured using a precision balance, the thickness and area are measured, and the skeletal density of the polymer is measured using a device such as a helium pycnometer. The mass of the measured specimen may be divided by the product of the thickness, area and skeletal density to calculate the volume ratio occupied by the solid within the film, and the porosity (%) may be obtained by subtracting the obtained value from the total volume.

As a non-limiting example, in the liquid infiltration method, the porosity may be calculated as follows. A specimen is sufficiently immersed in a solvent to impregnate the interior of the pores with the solvent. The mass of the impregnated specimen and the mass of the dried specimen may be measured, respectively. The measured mass difference is multiplied by the density of the solvent to calculate the volume filled in the pores, which is then compared with the total volume of the film to calculate the porosity.

The porous polymer film according to embodiments of the present disclosure may be applied to various electrochemical devices, including a separator for a secondary battery, and may be provided, for example, as a film for a separator.

The separator for a secondary battery according to embodiments of the present disclosure may include the above-described porous polymer film. The separator for a secondary battery may further include a coating including, for example, a gas adsorbent. The gas adsorbent may include, for example, a zeolite, and may further include one or more porous inorganic particles selected from the group consisting of, for example, aluminum hydroxide ($Al(OH)_3$), magnesium hydroxide ($Mg(OH)_2$), aluminum oxide ($Al_2O_3$), magnesium oxide (MgO), calcium oxide (CaO), barium sulfate ($BaSO_4$), boehmite, titanium dioxide ($TiO_2$), silica ($SiO_2$), and clay. As a non-limiting example, the gas adsorbent may have an average size($D_{50}$) of 0.01 to 5 $\mu$m.

The coating may further include at least one binder selected from the group consisting of polyvinylidene fluoride-co-hexafluoropropylene, polyvinylidene fluoride-co-trichloroethylene, polymethylmethacrylate, polyacrylonitrile, polyvinylpyrrolidone, polyvinylacetate, polyethylene-co-vinyl acetate, polyimide, polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose, and polyvinylalcohol.

In one embodiment, the separator for a secondary battery may have a thickness of 10 to 100 $\mu$m.

The gas separation membrane according to embodiments of the present disclosure may include the above-described porous polymer film. The gas separation membrane may further include, for example, a selective layer. The selective layer may include graphene oxide, a metal-organic framework (MOF), hydrotalcite, zirconate, or calcium oxide, but is not limited thereto. The gas separation membrane may further include an intermediate layer including a siloxane-based polymer and/or a polyacetylene-based polymer between the porous polymer film and the selective layer, and the intermediate layer may function as an adhesive layer. The above-described gas separation membrane may selectively separate gases such as carbon dioxide, hydrogen, helium, nitrogen, oxygen, and olefins.

Hereinafter, embodiments of the present disclosure will be further described with reference to specific experimental examples.

## Example 1

A polyethylene (PE) porous film having a thickness of 10 $\mu$m was placed in a vacuum chamber with a pressure of less than $10^{-2}$ torr (1.333 Pa) for 1 hour. $N_2$ gas was then supplied for 3 minutes to replace oxygen in the pores to an oxygen substitution degree of 80% or more.

The oxygen-exchanged PE porous film was embedded in an oxygen-impermeable outer case and sealed.

The film was then irradiated with electron beams at an accelerating voltage of 1 MeV in an air atmosphere until a cumulative dose of 100 kGy was achieved, thereby manufacturing a porous polymer film.

The oxygen substitution degree was calculated by multiplying the total volume ($V_F$) and the porosity ($R_P$) of each film before placing the film in the vacuum chamber to obtain the pore volume ($V_P$). The pore volume ($V_P$), an atmospheric absolute pressure of approximately 101.325 kPa, a room temperature of approximately 298.15 K, and the gas constant (R) of 8.314 J/mol·K were applied to the ideal gas equation of state (PV=nRT) to calculate the total molar amount of gas in the pores ($n_T$).

The total molar amount of oxygen present in the pores ($n_I$) was calculated by multiplying the mole fraction of oxygen in the atmosphere ($n_O$), which is approximately 0.21, by the total molar amount of gas in the pores ($n_T$).

The increase in partial pressure ($P_O$) of oxygen due to oxygen removed from the film in the vacuum chamber was measured.

The increase in partial pressure of oxygen ($P_O$), the effective volume ($V_C$) of the vacuum chamber, the internal temperature ($T_C$) of the vacuum chamber, and the gas constant (R) of 8.314 J/mol·K were applied to the ideal gas equation of state to calculate the total molar amount of oxygen removed from the pores ($n_F$).

The oxygen substitution degree was calculated as the percentage ratio of the total molar amount of oxygen removed from the pores ($n_F$) to the total molar amount of oxygen present in the pores ($n_I$) ($n_F/n_I$) was calculated as the oxygen substitution degree. Hereinafter, the oxygen substitution degree was calculated in the same manner.

### Example 2

A porous polymer film was manufactured in the same manner as in Example 1, except that electron beam irradiation was performed until a cumulative dose of 25 kGy was achieved.

### Example 3

A porous polymer film was manufactured in the same manner as in Example 1, except that electron beam irradiation was performed until a cumulative dose of 150 kGy was achieved.

### Comparative Example 1

A porous polymer film was manufactured in the same manner as in Example 1, except that the oxygen substitution degree of the film was adjusted to 50%.

### Comparative Example 2

A porous polymer film was manufactured in the same manner as in Example 1, except that a PE porous film having a thickness of 10 μm was left in an air atmosphere for 1 hour without being sealed in an oxygen-impermeable outer case, and was irradiated with electron beams in a 99.999% nitrogen atmosphere.

### Comparative Example 3

A porous polymer film was manufactured in the same manner as in Example 1, except that a PE porous film having a thickness of 10 μm was left in an air atmosphere for 1 hour, embedded in an oxygen-impermeable outer case, and irradiated with electron beams in an air atmosphere.

### Comparative Example 4

A porous polymer film was manufactured in the same manner as in Example 1, except that an oxygen-exchanged PE porous film was irradiated with electron beams in an air atmosphere without sealing.

### Reference Example

A PE porous film having a thickness of 10 μm was used.

The manufacturing conditions for the examples and comparative examples are shown in Table 1 below.

[TABLE 1]

| | Oxygen substitution degree (%) | Electron beam irradiation conditions | | |
| --- | --- | --- | --- | --- |
| | | Sealed | Cumulative dose (kGy) | Atmosphere |
| Example 1 | >80 | O | 100 | Air |

(continued)

| | Oxygen substitution degree (%) | Electron beam irradiation conditions | | |
| --- | --- | --- | --- | --- |
| | | Sealed | Cumulative dose (kGy) | Atmosphere |
| Example 2 | >80 | O | 25 | Air |
| Example 3 | >80 | O | 150 | Air |
| Comparative Example 1 | 50 | O | 100 | Air |
| Comparative Example 2 | - | X | 100 | Inert |
| Comparative Example 3 | - | O | 100 | Air |
| Comparative Example 4 | >80 | X | 100 | Air |
| Reference Example | - | - | - | - |

In Table 1, the sealed cases were indicated as 'O', and the unsealed cases were indicated as 'X.'

**Measurement Example**

The porous polymer films of the examples and comparative examples were measured using the following method, and the results are shown in Table 2. The crosslinking reactivity was calculated according to Equation 1 described above.

(1) Melt fracture temperature

The porous polymer films of the examples and comparative examples were heated from 25°C to 220°C at a rate of 5°C/min, and stretched with a force of 0.015 N using a thermomechanical analyzer. The temperature at which the film fractured was measured and designated as the melt fracture temperature.

(2) Gel content

3 g of the porous polymer films of the examples and comparative examples were immersed in xylene at 135°C for 3 hours. The mass of the undissolved residual solids was calculated as a percentage of the initial input mass (3 g) and designated as the gel content.

(3) HLMI

3 g of the porous polymer films of the examples and comparative examples were placed in a perforated chamber at a temperature of 190°C, a load of 21.6 kg was applied, and the mass of the molten polymer extruded over 10 minutes was measured to determine the high load melt index (HLMI). At this time, the diameter and length of the holes were formed to be 2.095 ± 0.005 mm and 8.000 ± 0.025 mm, respectively, the same as those of a standard die (orifice).
At this time, if the 3 g of porous polymer film injected was completely discharged before 10 minutes had elapsed, the HLMI was calculated based on the passage time up to that point.

(4) Porosity

The porosity of the porous polymer film was determined by calculating the space within the porous polymer film. Specifically, the porous polymer film was cut into a rectangle specimen having a size of D1 cm × D2 cm (thickness: T, $\mu$m). The mass (M, g) of the specimen was measured using a precision balance, and the skeletal density of PE ($\rho$, g/cm$^3$) was used to calculate the porosity according to the following equation:

$$\text{Porosity} = 1 - (M \times 10000) / (D1 \times D2 \times T \times \rho)$$

(5) Pore diameter

The pore diameter of the porous polymer film was measured using a capillary flow porometer (CFP-1500-AEL, PMI) according to the ASTM F316-03 standard. The measurement was performed by the half-dry method. As a test liquid for impregnating the pores, Galwick solution (surface tension: 15.9 dyne/cm; 15.9 mN/m) provided by PMI was used.

[TABLE 2]

|  | Melt fracture temperature (°C) | Gel content (%) | HLMI (g/10 min) | Crosslinking reactivity | Porosity (%) | Pore diameter (nm) |
|---|---|---|---|---|---|---|
| Example 1 | 190 | 100 | 0 | 1.9 | 50.0 | 43.3 |
| Example 2 | 165 | 95 | 0.02 | 1.55 | 50.9 | 40.9 |
| Example 3 | 210 | 100 | 0 | 2.15 | 50.0 | 43.5 |
| Comparative Example 1 | 150 | 70 | 0.13 | 0.92 | 50.8 | 42.7 |
| Comparative Example 2 | 150 | 25 | 3.77 | -3.4 | 50.2 | 42.1 |
| Comparative Example 3 | 150 | 1.3 | 7.54 | -7.5 | 50.6 | 43.2 |
| Comparative Example 4 | 150 | 1.3 | 7.54 | -7.5 | 50.5 | 43.7 |
| Reference example | 150 | 42.4 | 0.54 | 0.1 | 50.5 | 43.2 |

**Experimental Example: Evaluation of puncture durability**

The puncture strength of the porous polymer films of the examples and comparative examples was measured using an INSTRON Universal Test Machine (model name: 3345). An indentation probe equipped with a pin tip having a diameter of 1.0 mm and a radius of curvature of 0.5 mm was used for the test, and the indentation speed was set at 120 mm/min.

Specimens of the porous polymer film were cut into 50 mm × 50 mm pieces and fixed flatly on the lower jig of the test machine. The edges of the specimens were secured with clamps to prevent dislocation or wrinkling.

The indentation probe was moved perpendicularly to the film surface, and the resulting force-displacement curve was recorded. The puncture strength was evaluated as the maximum load (N) at the point of initial film fracture divided by the film thickness ($\mu$m), expressed as N/$\mu$m.

All specimens were stabilized for at least 24 hours at 25 $\pm$ 2°C and 50 $\pm$ 5% relative humidity before testing.

[TABLE 3]

|  | Puncture strength (N/$\mu$m) |
|---|---|
| Example 1 | 0.425 |
| Example 2 | 0.452 |
| Example 3 | 0.416 |
| Comparative Example 1 | 0.380 |
| Comparative Example 2 | 0.352 |
| Comparative Example 3 | 0.295 |
| Comparative Example 4 | 0.295 |
| Reference example | 0.460 |

Referring to Tables 2 and 3, the porous polymer films of the Examples having a crosslinking reactivity of 1.5 or more exhibited improved mechanical properties compared with the films of the Comparative Examples, since polymer chain degradation was suppressed. In addition, the porous polymer films of the Examples exhibited improved physical properties due to electron beam irradiation, as shown in Table 2, while maintaining a puncture strength at a level comparable to that of the Reference Example.

Conversely, the porous polymer films of the Comparative Examples having a crosslinking reactivity of less than 1.0 exhibited a significant decrease in puncture strength and/or reduced durability at high temperatures, resulting in deteriorated physical properties. Although polyethylene (PE) was used in the Examples to produce the porous polymer film, other types of polymers described in the present specification may likewise form a porous polymer film having a crosslinking reactivity of 1.0 or more, as defined by Equation 1 below, when prepared under the same or analogous manufacturing conditions.

**Claims**

1.  A porous polymer film having a crosslinking reactivity of 1.0 or more, as defined by Equation 1 below:

$$[\text{Equation 1}]$$

$$\text{Crosslinking reactivity} = ((A \times B) / 10000) - C,$$

wherein in Equation 1, A denotes the melt fracture temperature (°C), that is the temperature at which the porous polymer film fractures when stretched under a force of 0.015 N while being heated to 220°C at a heating rate of 5°C/min by thermomechanical analysis (TMA),
B denotes the gel content(%), which is the percentage obtained by dividing the mass of the undissolved residual solid after immersing the porous polymer film in xylene at 135°C for 3 hours by the initial mass, and
C denotes the high load melt index (HLMI) (g/10min) measured under conditions of a temperature of 190°C and a load of 21.6 kg according to ASTM D1238 for the porous polymer film.

2.  The porous polymer film according to claim 1, wherein, in Equation 1, A is 160°C or higher.

3.  The porous polymer film according to claims 1 or 2, wherein, in Equation 1, B is 80% or higher.

4.  The porous polymer film according to any one of claims 1 to 3, wherein, in Equation 1, C is 0.2 g/10 min or less.

5.  The porous polymer film according to any one of claims 1 to 4, wherein the porous polymer film has a porosity of 10% to 80%.

6.  The porous polymer film according to any one of claims 1 to 5, comprising at least one selected from the group consisting of polyethylene (PE), polypropylene (PP), polybutylene, polypentene, polymethylpentene, polyvinylidene fluoride (PVDF), polyvinylidene fluoride-hexafluoropropylene (PVDF-HFP), polyvinylidene fluoride-polychlorotrifluoroethylene (PVdF-CTFE), polyvinylidene fluoride-polyethylenetetrafluoroethylene (PVdF-ETFE), polyacrylonitrile (PAN), polyethylene terephthalate (PET), polybutylene terephthalate (PBT), polyethylene naphthalene (PEN), polyimide (PI), polyphenylene sulfide (PPS), polysulfone, polyethersulfone (PES), ethylene-vinyl acetate (EVA), and polycarbonate (PC).

7.  A separator for a secondary battery comprising the porous polymer film according to any one of claims 1 to 6.

8.  A gas separation membrane comprising the porous polymer film according to any one of claims 1 to 6.

9.  A method for manufacturing a porous polymer film, optionally for preparing a porous polymer film as defined in any one of claims 1 to 6, the method comprising the steps:

    extruding and stretching a raw material including a polymer to form a preliminary porous polymer film (step S10);
    forming an oxygen-exchanged preliminary porous polymer film in which an oxygen content based on the total gases included in the pores of the preliminary porous polymer film is less than 9% by volume ("vol%") (step S20);
    embedding and sealing the oxygen-exchanged preliminary porous polymer film in an oxygen-impermeable outer case (step S30); and
    irradiating the oxygen-exchanged preliminary porous polymer film with electron beams from an outside of the oxygen-impermeable outer case (step S40).

10.  The method of claim 9, wherein the preliminary porous polymer film is curable by electron beam irradiation, and/or wherein the preliminary porous polymer film includes one or more selected from the group of polyethylene, polypropylene, polymethylpentene, polyesters, polycarbonate, styrene resins, fluorine resins, and vinyl chloride resins.

11.  The method of claim 9 or 10, wherein, in step S20, the preliminary porous polymer film is left in a quasi-vacuum environment having an atmospheric pressure of less than $10^{-2}$ torr (1.333 Pa) for 30 minutes to 2 hours, and an inert gas is then supplied, so that some or all of the space previously occupied by oxygen prior to quasi-vacuum treatment is filled with the inert gas.

12. The method of claim 11, wherein the supply of the inert gas is performed under conditions of a flow rate of 0.5 L/min to 1.5 L/min, and/or
wherein the inert gas includes any one or more of $N_2$, He, Ar, Ne, Kr, and Xe.

13. The method of claim 11 or 12, wherein the inert gas is $N_2$.

14. The method of any one of claims 9 to 13, wherein, in step S30, the oxygen-impermeable outer case is configured to have an oxygen permeability of 1 cc/m$^2$/day/atm or less, determined according to the ASTM D3985 standard, and comprises at least one selected from the group consisting of polyamide-imide, polycarbonate, polypropylene, polyvinyl chloride, polyester, polyamide, polyurethane, and a mixture of polyethylene and paraffin,
preferably wherein the oxygen-impermeable outer case further comprises, at least in part, aluminum and/or stainless steel.

15. The method of any one of claims 9 to 14, wherein, in step S40, the electron beam is irradiated once or twice or more times from an outside of the oxygen-impermeable outer case,
wherein the electron beam is irradiated to a cumulative dose of 10 kGy to 300 kGy, preferably of 25 kGy to 150 kGy, more preferably of 75 kGy to 150 kGy.

[FIG. 1]

| Extruding and stretching of a raw material to form a preliminary porous polymer film | S10 |

↓

| Forming an oxygen-exchanged preliminary porous polymer film in which an oxygen content based on total gases included in pores of the preliminary porous polymer film is less than 9% by volume ("vol%") | S20 |

↓

| Embedding and sealing the oxygen-exchanged preliminary porous polymer film in an oxygen-impermeable outer case | S30 |

↓

| Irradiating the oxygen-exchanged preliminary porous polymer film with electron beams from an outside of the oxygen-impermeable outer case to manufacture the porous polymer film | S40 |

Europäisches
Patentamt

European
Patent Office

Office européen
des brevets

## EUROPEAN SEARCH REPORT

**Application Number**

EP 25 22 4562

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/317329 A1 (NAKADATE JUNICHI [JP] ET AL) 2 November 2017 (2017-11-02) | 1-7,9-15 | INV. C08J5/20 |
| Y | * paragraphs [0010], [0185]; example 1 * | 8 | B01D71/26 H01M50/414 |
| X | US 2006/188786 A1 (LEE SANG-YOUNG [KR] ET AL) 24 August 2006 (2006-08-24) | 1-7 | H01M50/491 C08J7/12 |
| Y | * paragraphs [0022], [0023], [0104]; example 1; table 1 * | 8 | |
| Y | JP H11 106552 A (TONEN KAGAKU KK) 20 April 1999 (1999-04-20) | 8 | |
| A | * paragraph [0002] * | 1-7,9-15 | |

**TECHNICAL FIELDS SEARCHED (IPC)**

C08J
B01D
H01M

The present search report has been drawn up for all claims

| Place of search | Date of completion of the search | Examiner |
|---|---|---|
| Munich | 22 April 2026 | Frison, Céline |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 22 4562

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2026

| Patent document cited in search report | | | Publication date | Patent family member(s) | | | Publication date |
|---|---|---|---|---|---|---|---|
| US 2017317329 | A1 | | 02-11-2017 | CN | 107155329 | A | 12-09-2017 |
| | | | | EP | 3216826 | A1 | 13-09-2017 |
| | | | | JP | 6046835 | B2 | 21-12-2016 |
| | | | | JP | WO2016072420 | A1 | 27-04-2017 |
| | | | | KR | 20170083051 | A | 17-07-2017 |
| | | | | TW | 201618945 | A | 01-06-2016 |
| | | | | US | 2017317329 | A1 | 02-11-2017 |
| | | | | WO | 2016072420 | A1 | 12-05-2016 |
| US 2006188786 | A1 | | 24-08-2006 | CN | 1329638 | A | 02-01-2002 |
| | | | | DE | 69915380 | T2 | 24-02-2005 |
| | | | | EP | 1157067 | A1 | 28-11-2001 |
| | | | | JP | 3639535 | B2 | 20-04-2005 |
| | | | | JP | 2002531669 | A | 24-09-2002 |
| | | | | KR | 20000038611 | A | 05-07-2000 |
| | | | | US | 2006188786 | A1 | 24-08-2006 |
| | | | | WO | 0034384 | A1 | 15-06-2000 |
| JP H11106552 | A | | 20-04-1999 | NONE | | | |

EPO FORM P0459

For more details about this annex : see Official Journal of the European Patent Office, No. 12/82